# FASCICULE DE BREVET EUROPEEN

(11) **EP 3 219 691 B1**
(45) Date de publication et mention de la délivrance du brevet: **27.02.2019**
(21) Numéro de dépôt: 16160506.8
(22) Date de dépôt: 15.03.2016
(51) Int. Cl.: C04B 35/115, F16C 33/04, G04B 31/06, G04B 31/004, C04B 35/111

(54) **CÉRAMIQUE POLYCRISTALLINE ROUGE OPAQUE**
OPAKE ROTE POLYKRISTALLINE KERAMIK
OPAQUE RED POLYCRYSTALLINE CERAMIC

(43) Date de publication de la demande: 20.09.2017
(73) Titulaire: The Swatch Group Research and Development Ltd., 2074 Marin (CH); EMPA, Swiss Federal Laboratories for Materials Testing and Research, 8600 Dübendorf (CH)
(72) Inventeur: Luebbe, Henning, 2502 Bienne (CH); Kubrin, Roman, 8051 Zürich (CH); Blugan, Gurdial, 8600 Dübendorf (CH); Kuebler, Jakob, 8535 Herdern (CH); Bourban, Stewes, 1589 Chabrey (CH); Actis-Datta, Arnaud, 2854 Bassecourt (CH)
(74) Mandataire: Goulette, Ludivine

(56) Documents cités:
- GB-A- 2 010 236
- US-A- 3 026 210

## Description

### Domaine de l'invention

L'invention se rapporte à une céramique polycristalline rouge opaque et à un procédé de fabrication d'une telle céramique.

### Arrière-plan de l'invention

Il est connu depuis les années soixante-dix de former des coussinets à base de céramique polycristalline. En effet, s'agissant de coussinets habituellement formés à partir de rubis monocristallin qui est transparent, les études des années soixante-dix, comme, par exemple, dans le document GB 2,010,236, ont consisté à fabriquer des coussinets à base de céramique polycristalline capables de remplacer, à moindre coût, le rubis monocristallin, c'est-à-dire s'en approchant le plus possible quant à la couleur et la transparence.

Le document GB 2,010,236 propose ainsi de former une céramique polycristalline à base d'alumine, d'oxyde de chrome et d'oxyde de magnésium et d'y ajouter de l'oxyde strontium afin d'obtenir une céramique polycristalline proche d'un rubis monocristallin tant en terme de couleur que de transparence.

Toutefois, si cette composition peut donner satisfaction pour remplacer le rubis monocristallin, les céramiques polycristallines connues ne donnent en revanche pas satisfaction en termes d'apparence (couleur trop rose et trop transparente) et de caractéristiques mécaniques (ténacité K*_{c}* trop basse) pour qu'elles puissent être utilisées pour une pièce de l'habillage d'une pièce d'horlogerie.

### Résumé de l'invention

Le but de la présente invention est de pallier tout ou partie les inconvénients cités précédemment en proposant une céramique polycristalline de couleur rouge et opaque pour une épaisseur habituelle de pièce d'habillage d'une pièce d'horlogerie tout en ayant une ténacité supérieure ou égale à 2,8 MPa.m^{1/2}.

A cet effet, l'invention se rapporte à une céramique polycristalline uniquement formée à base d'alumine, d'oxyde de chrome et d'oxyde de magnésium caractérisée en ce que la céramique polycristalline comporte entre 0,8% et 1,2% d'oxyde de chrome en masse totale de la céramique polycristalline et entre 0,03% et 0,09% d'oxyde de magnésium en masse totale de la céramique polycristalline permettant d'obtenir une céramique rouge avec une ténacité (K*_{c}*) au moins égale à 2,8 MPa.m^{1/2}.

Ainsi, de manière surprenante, il a été trouvé qu'en variant uniquement les proportions d'oxyde de chrome et d'oxyde de magnésium par rapport à celle d'alumine, il est possible d'obtenir tous les avantages souhaités. Il est apparu, grâce notamment à la ténacité K*_{c}* étonnamment haute obtenue, qu'il était possible d'incruster, postérieurement à la fabrication de la céramique polycristalline, des inserts métalliques comme par exemple selon le procédé divulgué dans le document EP 2 315 673.

Par conséquent, contrairement aux études des années soixante-dix, comme, par exemple, le document GB 2,010,236, il est apparu qu'il n'est pas nécessaire d'ajouter d'autres oxydes métalliques pour améliorer l'apparence et/ou les caractéristiques mécaniques.

Conformément à d'autres variantes avantageuses de l'invention :
- la céramique polycristalline comporte une densité au moins égale à 3,9 g.cm⁻³ ;
- la céramique polycristalline comporte un espace colorimétrique CIELAB dont l'angle de teinte (H) est compris en 19° et 27° ;
- la céramique polycristalline comporte un espace colorimétrique CIELAB dont la composante L* est comprise entre 37 et 45, la composant a* comprise entre 15 et 26 et la composante b* comprise entre 5 et 13 ;
- la céramique polycristalline comporte sensiblement 98,92% d'alumine, sensiblement 1,02% d'oxyde de chrome, et sensiblement 0,06% d'oxyde de magnésium.

De plus, l'invention se rapporte à une pièce d'horlogerie caractérisée en ce qu'elle comporte un organe tout ou partie formé à l'aide d'une céramique polycristalline selon l'une des variantes précédentes.

Enfin, l'invention se rapporte à un procédé de fabrication d'une céramique polycristalline rouge et opaque caractérisé en ce que le procédé comporte les étapes suivantes :
a) former un mélange sous forme de poudre comportant entre 0,5 mol% et 0,8 mol% de cations de chrome, entre 0,04 mol% et 0,12 mol% de cations de magnésium et le reste en cations d'aluminium sous forme d'alumine ;
b) broyer la poudre ;
c) réaliser une atomisation de la poudre broyée afin d'obtenir des granulats ;
d) mettre en forme les granulats afin d'obtenir un corps vert ;
e) transformer le corps vert en céramique pour obtenir la céramique polycristalline.

Conformément à d'autres variantes avantageuses de l'invention :
- l'étape a) est réalisée par voie liquide ;
- les granulats obtenus lors de l'étape c) sont sensiblement sphériques et comportent un diamètre compris entre 30 et 120 *µ*m ;
- l'étape d) comporte un pressage des granulats dans un moule ;
- l'étape e) comporte un frittage du corps vert.

### Description détaillée des modes de réalisation préférés

Comme expliqué ci-dessus, l'invention se rapporte à une céramique polycristalline formée à base d'alumine, d'oxyde de chrome et d'oxyde de magnésium et notamment une pièce d'habillage formée à base d'une telle céramique polycristalline.

Cette pièce d'habillage a été imaginée pour des applications dans le domaine horloger. On peut, à titre d'exemple, envisager de former un boîtier, un cadran, un affichage, un décor, un index, une applique, un réhaut, une lunette, un poussoir, une couronne, un fond de boîtier, une aiguille ou un bracelet totalement ou partiellement à base d'une céramique polycristalline selon l'invention.

L'étude initiale avait pour objet la fabrication d'une céramique polycristalline rouge et opaque comportant des caractéristiques mécaniques aptes à former une pièce de l'habillage d'une pièce d'horlogerie. L'étude a commencé par sélectionner des céramiques à base d'alumine et de zircone qui sont les bases généralement utilisées en horlogerie. Toutefois, il est apparu qu'il était difficile d'obtenir des céramiques à base de zircone avec une couleur satisfaisante et qu'il était difficile d'obtenir des céramiques à base d'alumine avec des caractéristiques mécaniques satisfaisantes.

L'étude a arbitrairement privilégié l'approche d'une couleur satisfaisante, c'est-à-dire rouge et opaque, et a, par conséquent, sélectionné un développement de céramique à base d'alumine. Toutefois, de manière surprenante, il a été trouvé au fil des tests de fabrication que suivant les proportions d'oxyde de chrome et d'oxyde de magnésium par rapport à celle d'alumine, qu'il est possible d'obtenir tous les avantages souhaités et notamment d'obtenir une ténacité K*_{c}* suffisante, c'est-à-dire typiquement supérieure ou égale à 2,8 MPa.m^{1/2}, qui permet d'utiliser la céramique polycristalline pour n'importe quelle pièce d'habillage d'une pièce d'horlogerie.

Etonnamment, il est même apparu, grâce notamment à la ténacité K*_{c}* ainsi obtenue, qu'il était possible d'incruster, postérieurement à la fabrication de la céramique polycristalline, des inserts métalliques comme, par exemple, selon le procédé divulgué dans le document EP 2 315 673.

On comprend donc que, contrairement aux études des années soixante-dix, comme, par exemple, le document GB 2,010,236, il est apparu qu'il n'est pas nécessaire d'ajouter d'autres oxydes métalliques pour améliorer l'apparence et/ou les caractéristiques mécaniques.

Pour obtenir ces avantages, la céramique polycristalline comporte, selon l'invention, entre 0,8% et 1,2% d'oxyde de chrome en masse totale de la céramique polycristalline et entre 0,03% et 0,09% d'oxyde de magnésium en masse totale de la céramique, le reste étant formé par de l'alumine, afin d'obtenir une céramique rouge avec une ténacité K*_{c}* au moins égale à 2,8 MPa.m^{1/2}.

La couleur rouge, selon l'invention, signifie que la céramique comporte un espace colorimétrique CIELAB (norme ISO 11664-4 définie par la Commission Internationale de l'Eclairage) dont la composante L* est comprise entre 37 et 45, la composant a* comprise entre 15 et 26 et la composante b* comprise entre 5 et 13.

Cet espace colorimétrique CIELAB comporte, selon l'invention, un angle de teinte H (connu sous les termes anglais « Hue angle »), c'est-à-dire la pente que forme les coordonnées des composantes a* et b* par rapport au point d'origine pour lequel les composantes a* et b* sont égales à 0, qui est compris en 19° et 27°.

Le caractère opaque signifie un facteur de transmission, parfois appelé transmittance, inférieur ou égale à environ 9% pour une épaisseur de céramique d'environ 400 *µ*m et une source lumineuse combinant toutes les longueurs d'onde (lumière blanche).

Le tableau 1 ci-dessous regroupe les caractéristiques mécaniques de cinq exemples de l'étude :

**Tableau 1**

| | Al₂O₃ % | Cr₂O₃ % | MgO % | *d* g.cm⁻³ | dureté HV | K*_{c}* MPa.m^{1/2} |
|---|---|---|---|---|---|---|
| 1 | 98,96 | 1,02 | 0,02 | 3,95 | 1820 | 2,5 |
| 2 | 98,95 | 1,02 | 0,03 | 3,90 | 1870 | 2,8 |
| 3 | 98,92 | 1,02 | 0,06 | 3,98 | 2050 | 3,0 |
| 4 | 98,87 | 1,02 | 0,11 | 3,97 | 1910 | 2,4 |
| 5 | 98,83 | 1,02 | 0,15 | 3,96 | 1920 | 2,3 |

Le tableau 2 ci-dessous regroupe les caractéristiques colorimétriques des cinq exemples du tableau 1 :

**Tableau 2**

| | L* | a* | b* | C | H° |
|---|---|---|---|---|---|
| 1 | 44,9 | 23,4 | 10,6 | 25,7 | 23,6 |
| 2 | 44,5 | 25,9 | 12,7 | 28,9 | 26,2 |
| 3 | 41,2 | 20,7 | 8,6 | 22,4 | 22,5 |
| 4 | 43,0 | 22,1 | 9,6 | 24,1 | 23,6 |
| 5 | 42,5 | 22,2 | 10,2 | 24,4 | 24,6 |

Chaque tableau a été formé avec la moyenne des valeurs de plusieurs échantillons pour chaque composition. Les valeurs de ténacité K*_{c}* ont été obtenues à partir de mesures de dureté Vickers selon une charge de 3 kgf à l'aide d'un microduromètre Wolpert DIA Testor 2N. Les valeurs de l'espace colorimétrique CIELAB ont été obtenues sur les échantillons polis à l'aide d'un spectrophotomètre Konika Minolta CM 3610A.

La proportion d'oxyde de chrome influence la couleur rouge de la céramique polycristalline à base d'alumine. Une faible proportion donnera une teinte rouge pâle et, une trop forte proportion, une teinte rose soutenue. Lors de l'étude pour obtenir une céramique rouge, une proportion entre 0,8% et 1,2% d'oxyde de chrome en masse totale de la céramique polycristalline a été maintenue, et, de manière préférée, autour de 1% d'oxyde de chrome en masse totale de la céramique polycristalline.

On remarque que l'étude est portée plus particulièrement sur l'étude des variations de couleur et des caractéristiques mécaniques de la céramique polycristalline en fonction de la variation de la proportion d'oxyde de magnésium avec un taux autour de 1% d'oxyde de chrome en masse totale de la céramique polycristalline.

En effet, il a été trouvé que le taux d'oxyde de magnésium dans la céramique polycristalline finale influence l'angle de teinte H, la densité *d* et la ténacité K*_{c}*. Ainsi, comme visible, dans les tableaux 1 et 2, le taux d'oxyde de magnésium dans la céramique polycristalline est préférentiellement maintenu entre 0,03% et 0,09% d'oxyde de magnésium en masse totale de la céramique polycristalline afin de pouvoir bénéficier aussi bien d'une couleur rouge opaque que de caractéristiques mécaniques suffisamment hautes.

En effet, après la lecture du tableau 1, on s'aperçoit, de manière surprenante, que la ténacité K*_{c}* augmente puis redescend brutalement à la même valeur que pour de faible teneur en oxyde de magnésium. Dans le même temps, on voit que, pour le même procédé de fabrication comme expliqué ci-dessous, les valeurs de densité *d* restent sensiblement équivalentes sauf pour l'exemple 2 qui est de plus faible densité.

Le tableau 2 révèle, également de manière surprenante, que l'espace colorimétrique des céramiques polycristallines suit une tendance proche de celle de la ténacité, c'est-à-dire augmente puis redescend brutalement à la même valeur que pour de faible teneur en oxyde de magnésium. Toutefois, on s'aperçoit que le point d'inflexion est décalé vers une plus faible valeur en oxyde de magnésium que pour la ténacité et suit une courbe sensiblement inverse à celle de la densité *d*.

L'exemple 3 de céramique polycristalline obtenu lors de l'étude a donné le meilleur résultat tant au niveau de la couleur que des caractéristiques mécaniques. L'exemple 3 comporte sensiblement 98,92% d'alumine (Al₂O₃), sensiblement 1,02% d'oxyde de chrome (Cr₂O₃), et sensiblement 0,06% d'oxyde de magnésium (MgO) avec une densité *d* égale à 3,98 g.cm⁻³ et une ténacité K*_{c}* égale à 3,0 MPa.m^{1/2}.

De plus, l'exemple 3 comporte un espace colorimétrique CIELAB dont la composante L* est sensiblement égale à 41,2, la composant a* égale à 20,7 et la composante b* égale à 8,6 donnant un angle de teinte H égal à 22,5°. Cette couleur peut être considérée comme une couleur rouge profond du type bordeaux et opaque car elle a révélé un facteur de transmission T sensiblement égal à 7,5% pour une épaisseur de céramique d'environ 410 *µ*m et une source lumineuse combinant toutes les longueurs d'onde (lumière blanche) à l'aide d'un conoscope Eldim EZ-Lite.

Un exemple de procédé de fabrication permettant d'obtenir une céramique polycristalline selon l'invention va maintenant être expliqué. Préférentiellement selon l'invention, le procédé de fabrication est réalisé par voie liquide afin de garantir une meilleure homogénéisation des différents éléments pour ainsi obtenir une céramique polycristalline avec une couleur bien saturée, homogène et colorée dans la masse.

Le procédé comporte une première étape destinée à former un mélange sous forme de poudre des différents éléments. Plus précisément, la première étape, en masse totale de poudre, entre 0,5 mol% et 0,8 mol% de cations de chrome, entre 0,04 mol% et 0,12 mol% de cations de magnésium et le reste en cations d'aluminium à l'aide d'alumine.

La première étape comporte une première phase destinée à préparer séparément de la poudre d'alumine, des sels de chrome et des sels de magnésium.

Lors de l'étude, les sels de chrome ont été préparés à partir de nitrate de chrome Cr(NO₃)₃*9H₂O et les sels de magnésium à partir d'acétate de magnésium Mg(CH₃COO)₂*4H₂O. Toutefois, les sels de chrome et/ou de magnésium pourraient être apportés sous d'autres formes telles que des nitrates ou hydroxydes.

Lors d'une deuxième phase, la poudre d'alumine, les sels de chrome et les sels de magnésium sont mélangés dans de l'eau et soumis à une agitation jusqu'à obtenir une coloration homogène de la solution. A titre d'exemple, dans le cas de l'exemple 3, 300 g de poudre d'alumine, 16,24 g de nitrate de chrome et 1 g d'acétate de magnésium ont été mélangés avec 280 ml d'eau distillée.

Le procédé se poursuit avec une troisième phase de séchage de la suspension afin d'obtenir une poudre du mélange de la deuxième phase. La troisième phase peut, par exemple, être obtenue à l'aide d'un évaporateur rotatif destiné à enlever l'eau de la solution.

La première étape se termine par une quatrième phase de calcination de la poudre destinée à retirer les éléments apportés avec les sels de chrome et des sels de magnésium comme, par exemple, les groupements nitrates ou acétates ou de l'eau. Une telle quatrième phase peut être obtenue par un traitement thermique à plusieurs centaines de degrés Celsius. A la fin de la première étape, une poudre granulée est ainsi obtenue. A titre d'exemple, dans le cas de l'exemple 3, un mélange, après calcination à 600°C, comportant 0,68 mol% de cations de chrome, 0,08 mol% de cations de magnésium et 99,24 mol% de cations d'aluminium sous forme d'alumine, sous forme de poudre est obtenu.

La deuxième étape du procédé est destinée à broyer la poudre granulée afin d'obtenir une poudre homogène en terme de taille de grains. Une telle deuxième étape peut être effectuée à sec ou sous forme liquide.

La troisième étape du procédé est destinée à réaliser une atomisation de la poudre broyée afin d'obtenir des granulats sensiblement sphériques et homogènes dont le diamètre est compris entre 30 et 120 *µ*m. Une telle troisième étape peut être effectuée à l'aide d'une tour d'atomisation habituelle en utilisant un (ou plusieurs) adjuvant(s), comme, par exemple, un liant organique, destiné(s) à faciliter l'atomisation.

Une quatrième étape est destinée à mettre en forme les granulats afin de former un corps vert de la forme de la pièce finale souhaitée pour la céramique polycristalline. Une telle quatrième étape peut être obtenue, par exemple, par pressage des granulats dans un moule.

Enfin, le procédé se termine avec une cinquième étape destinée à transformer le corps vert en céramique polycristalline selon l'invention. La cinquième étape peut, par exemple, comporter une première phase de déliantage destinée à retirer du corps vert tout adjuvant apporté lors de l'atomisation puis une deuxième phase de frittage. Chaque phase est principalement caractérisée par la température appliquée au corps vert. Ainsi, la température lors de la première phase peut être comprise entre 300 et 700°C alors que la température, lors de la deuxième phase, est comprise entre 1400 et 1700°C. A titre d'exemple, dans le cas de l'exemple 3, une première phase à 600°c puis une deuxième phase à 1600°C sous air est effectuée.

A titre d'exemple, dans le cas de l'exemple 3, des pièces d'habillage ont été fabriquées pour des pièces d'horlogerie comme notamment une lunette et une phase de lune. Ainsi, dans le cas de l'exemple 3, le procédé a permis d'obtenir une céramique rouge opaque qui comporte sensiblement 98,92% d'alumine (Al₂O₃), sensiblement 1,02% d'oxyde de chrome (Cr₂O₃), et sensiblement 0,06% d'oxyde de magnésium (MgO) avec une densité *d* égale à 3,98 g.cm⁻³.

Plus précisément, après mesure par spectrophotométrie, la céramique polycristalline de l'exemple 3 comporte un espace colorimétrique CIELAB dont la composante L* est sensiblement égale à 41,2, la composant a* égale à 20,7 et la composante b* égale à 8,6 donnant un angle de teinte H égale à 22,5° correspondant à une couleur opaque rouge profond du type bordeaux du plus bel effet pour une pièce d'horlogerie.

Enfin, après mesure, la céramique polycristalline de l'exemple 3 comporte une ténacité K*_{c}* égale à 3,0 MPa.m^{1/2} ce qui, étonnamment s'agissant d'une céramique à base d'alumine, permet d'incruster, postérieurement à la fabrication de la céramique polycristalline, des inserts métalliques comme, par exemple, selon le procédé divulgué dans le document EP 2 315 673. Il a notamment été possible d'incruster une graduation en alliage métallique amorphe dans une lunette fabriquée à partir d'une céramique rouge opaque de l'exemple 3 selon l'invention.

Bien entendu, la présente invention ne se limite pas à l'exemple illustré mais est susceptible de diverses variantes et modifications qui apparaîtront à l'homme de l'art. En particulier, l'invention ne saurait se limiter à une pièce d'habillage ou même au domaine horloger. Ainsi, à titre d'exemple, rien n'empêche d'utiliser la céramique polycristalline selon l'invention pour une application dans le domaine des arts de la table, de la bijouterie ou de la joaillerie.

De plus, l'étude a également révélé que la quatrième étape destinée à mettre en forme les granulats peut influencer la couleur de la céramique polycristalline finale. Il a été montré que des rouges plus profonds ou plus pâles pour chaque composition des exemples 1 à 5 ci-dessus peuvent être obtenus suivant la méthode mise en oeuvre. Après analyse, c'est, en fait, la densité de la céramique polycristalline qui va engendrer la variation de son espace colorimétrique.

Pour les tableaux 1 et 2, le procédé mis en oeuvre est resté rigoureusement le même afin de pouvoir comparer les résultats obtenus. Plus précisément, la quatrième étape a toujours utilisé un pressage à l'aide d'une presse uniaxiale industrielle où on contrôle uniquement le déplacement.

Des mesures complémentaires ont été réalisées à l'aide d'une quatrième étape alternative comportant un pressage uniaxial à froid (également connu sous l'abréviation UP) suivi d'un pressage isostatique à froid (également connu sous l'abréviation CIP). Le pressage uniaxial à froid permet à la presse de choisir non pas un déplacement prédéterminé mais une pression déterminée à appliquer sur les granulats dans le moule alors que, pour le pressage isostatique à froid, l'échantillon est immergé dans un bain (d'eau ou d'huile) qui est ensuite pressurisé.

Le tableau 3 ci-dessous regroupe les caractéristiques mécaniques des variations 3' et 5' des exemples 3 et 5 dues au pressage :

**Tableau 3**

| | L* | a* | b* | C | H° | *d* g.cm⁻³ |
|---|---|---|---|---|---|---|
| 3 | 41,2 | 20,7 | 8,6 | 22,4 | 22,5 | 3,98 |
| 3' | 38,7 | 18,3 | 6,7 | 19.5 | 20,2 | 3,99 |
| 5 | 42,5 | 22,2 | 10,2 | 24,4 | 24,6 | 3,96 |
| 5' | 37,5 | 15,4 | 5,5 | 16,3 | 19,8 | 4,00 |

Le tableau 3 montre immédiatement que la densité *d* obtenue est plus haute pour les mêmes proportions (exemple 3 ou 5 vers exemple 3' ou 5') d'alumine, d'oxyde de chrome et d'oxyde de magnésium dans la céramique polycristalline. On s'aperçoit que cette densité *d* plus élevée influence la couleur rouge obtenue en rendant le rouge plus profond.

On comprend donc que, pour une même composition de céramique polycristalline selon l'invention, plus la densité *d* est élevée, plus l'angle de teinte H est diminué, et, inversement, moins la densité *d* est élevée, plus l'angle de teinte H est augmenté. Avantageusement selon l'invention, la céramique polycristalline comporte, préférentiellement, une densité au moins égale à 3,9 g.cm⁻³ afin de maintenir les avantages de l'invention.

## Revendications

1. Céramique polycristalline uniquement formée à base d'alumine, d'oxyde de chrome et d'oxyde de magnésium **caractérisée en ce que** la céramique polycristalline comporte entre 0,8% et 1,2% d'oxyde de chrome en masse totale de la céramique polycristalline et entre 0,03% et 0,09% d'oxyde de magnésium en masse totale de la céramique polycristalline permettant d'obtenir une céramique rouge avec une ténacité (K*_{c}*) au moins égale à 2,8 MPa.m^{1/2}.

2. Céramique polycristalline selon la revendication précédente, **caractérisée en ce que** la céramique polycristalline comporte une densité au moins égale à 3,9 g.cm⁻³.

3. Céramique polycristalline selon la revendication 1 ou 2, **caractérisée en ce que** la céramique polycristalline comporte un espace colorimétrique CIELAB dont l'angle de teinte (H) est compris en 19° et 27°.

4. Céramique polycristalline selon la revendication précédente, **caractérisée en ce que** la céramique polycristalline comporte un espace colorimétrique CIELAB dont la composante L* est comprise entre 37 et 45, la composant a* comprise entre 15 et 26 et la composante b* comprise entre 5 et 13.

5. Céramique polycristalline selon l'une des revendications précédentes, **caractérisée en ce que** la céramique polycristalline comporte sensiblement 98,92% d'alumine, sensiblement 1,02% d'oxyde de chrome, et sensiblement 0,06% d'oxyde de magnésium.

6. Pièce d'horlogerie **caractérisée en ce qu'**elle comporte un organe tout ou partie formé à l'aide d'une céramique polycristalline selon l'une des revendications précédentes.

7. Procédé de fabrication d'une céramique polycristalline comportant les étapes suivantes :
a) former un mélange sous forme de poudre comportant entre 0,5 mol% et 0,8 mol% de cations de chrome, entre 0,04 mol% et 0,12 mol% de cations de magnésium et le reste en cations d'aluminium sous forme d'alumine ;
b) broyer la poudre ;
c) réaliser une atomisation de la poudre broyée afin d'obtenir des granulats ;
d) mettre en forme les granulats afin d'obtenir un corps vert ;
e) transformer le corps vert en céramique pour obtenir la céramique polycristalline.

8. Procédé selon la revendication précédente, **caractérisé en ce que** l'étape a) est réalisée par voie liquide.

9. Procédé selon la revendication 7 ou 8, **caractérisé en ce que** les granulats obtenus lors de l'étape c) sont sensiblement sphériques et comportent un diamètre compris entre 30 et 120 *µ*m.

10. Procédé selon l'une des revendications 7 à 9, **caractérisé en ce que** l'étape d) comporte un pressage des granulats dans un moule.

11. Procédé selon l'une des revendications 7 à 10, **caractérisé en ce que** l'étape e) comporte un frittage du corps vert.

## Patentansprüche

1. Polykristalline Keramik nur auf Basis von Aluminiumoxid, Chromoxid und Magnesiumoxid, **dadurch gekennzeichnet, dass** die polykristalline Keramik zwischen 0,8 % und 1,2 % Chromoxid in Bezug auf die Gesamtmasse der polykristallinen Keramik und zwischen 0,03 % und 0,09 % Magnesiumoxid in Bezug auf die Gesamtmasse der polykristallinen Keramik enthält, um eine rote Keramik mit einer Festigkeit (K_{c}) mindestens gleich 2,8 MPa · m^{1/2} zu erhalten.

2. Polykristalline Keramik nach dem vorhergehenden Anspruch, **dadurch gekennzeichnet, dass** die polykristalline Keramik eine Dichte von mindestens 3,9 g · cm⁻³ aufweist.

3. Polykristalline Keramik nach Anspruch 1 oder 2, **dadurch gekennzeichnet, dass** die polykristalline Keramik einen CIELAB-Farbraum besitzt, dessen Farbtonwinkel (H) zwischen 19° und 27° liegt.

4. Polykristalline Keramik nach dem vorhergehenden Anspruch, **dadurch gekennzeichnet, dass** die polykristalline Keramik einen CIELAB-Farbraum besitzt, dessen Komponente L* zwischen 37 und 45 liegt, dessen Komponente a* zwischen 15 und 26 liegt und dessen Komponente b* zwischen 5 und 13 liegt.

5. Polykristalline Keramik nach einem der vorhergehenden Ansprüche, **dadurch gekennzeichnet, dass** die polykristalline Keramik im Wesentlichen 98,92 % Aluminiumoxid, im Wesentlichen 1,02 % Chromoxid und im Wesentlichen 0,06 % Magnesiumoxid enthält.

6. Zeitmessgerät, **dadurch gekennzeichnet, dass** es ein Organ aufweist, das ganz oder teilweise aus einer polykristallinen Keramik nach einem der vorhergehenden Ansprüche gebildet ist.

7. Verfahren zum Herstellen einer polykristallinen Keramik, umfassend die folgenden Schritte:
a) Bilden eines Gemisches in Form eines Pulvers, das zwischen 0,5 Mol-% und 0,8 Mol-% Chrom-Kationen, zwischen 0,04 Mol-% und 0,12 Mol-% Magnesium-Kationen und als Rest Aluminium-Kationen in Form von Aluminiumoxid enthält;
b) Mahlen des Pulvers;
c) Zerstäuben des gemahlenen Pulvers, um Körnungen zu erhalten;
d) Formen der Körnungen, um einen Grünkörper zu erhalten;
e) Umwandeln des Grünkörpers in Keramik, um die polykristalline Keramik zu erhalten.

8. Verfahren nach dem vorhergehenden Anspruch, **dadurch gekennzeichnet, dass** der Schritt a) mit flüssigen Mitteln ausgeführt wird.

9. Verfahren nach Anspruch 7 oder 8, **dadurch gekennzeichnet, dass** die im Schritt c) erhaltenen Körnungen im Wesentlichen kugelförmig sind und einen Durchmesser von 30 bis 120 µm besitzen.

10. Verfahren nach einem der Ansprüche 7 bis 9, **dadurch gekennzeichnet, dass** der Schritt d) ein Drücken der Körnungen in eine Form umfasst.

11. Verfahren nach einem der Ansprüche 7 bis 10, **dadurch gekennzeichnet, dass** der Schritt e) das Sintern des Grünkörpers umfasst.

## Claims

1. A polycrystalline ceramic solely formed based on alumina, on chromium oxide and on magnesium oxide, **characterized in that** the polycrystalline ceramic comprises between 0.8% and 1.2% of chromium oxide by total weight of the polycrystalline ceramic and between 0.03% and 0.09% of magnesium oxide by total weight of the polycrystalline ceramic, making it possible to obtain a red ceramic with a toughness (K*_{c}*) at least equal to 2.8 MPa.m^{1/2}.

2. The polycrystalline ceramic as claimed in the preceding claim, **characterized in that** the polycrystalline ceramic comprises a density at least equal to 3.9 g.cm⁻³.

3. The polycrystalline ceramic as claimed in claim 1 or 2, **characterized in that** the polycrystalline ceramic comprises a CIELAB colorimetric space, the hue angle (H) of which is between 19° and 27°.

4. The polycrystalline ceramic as claimed in the preceding claim, **characterized in that** the polycrystalline ceramic comprises a CIELAB colorimetric space, the L* component of which is between 37 and 45, the a* component of which is between 15 and 26 and the b* component of which is between 5 and 13.

5. The polycrystalline ceramic as claimed in one of the preceding claims, **characterized in that** the polycrystalline ceramic comprises substantially 98.92% of alumina, substantially 1.02% of chromium oxide and substantially 0.06% of magnesium oxide.

6. A timepiece, **characterized in that** it comprises a member completely or partially formed using a polycrystalline ceramic as claimed in one of the preceding claims.

7. A process for the manufacture of a polycrystalline ceramic, **characterized in that** the process comprises the following stages:
a) forming a mixture in the powder form comprising between 0.5 mol% and 0.8 mol% of chromium cations, between 0.04 mol% and 0.12 mol% of magnesium cations and the remainder as aluminum cations in the alumina form;
b) grinding the powder;
c) carrying out an atomization of the ground powder in order to obtain aggregates;
d) shaping the aggregates in order to obtain a green body;
e) transforming the green body into ceramic in order to obtain the polycrystalline ceramic.

8. The process as claimed in the preceding claim, **characterized in that** stage a) is carried out by the liquid route.

9. The process as claimed in claim 7 or 8, **characterized in that** the aggregates obtained during stage c) are substantially spherical and comprise a diameter of between 30 and 120 *µ*m.

10. The process as claimed in one of claims 7 to 9, **characterized in that** stage d) comprises a pressing of the aggregates in a mold.

11. The process as claimed in one of claims 7 to 10, **characterized in that** stage e) comprises a sintering of the green body.
